# EUROPEAN PATENT APPLICATION

(11) **EP 4 091 846 A1**
(43) Date of publication of application: **23.11.2022**
(21) Application number: 22172985.8
(22) Date of filing: 12.05.2022
(51) Int. Cl.: B60F 3/00

(54) **AMPHIBIOUS VEHICLE**

(30) Priority: 19.05.2021 SE 2130134
(71) Applicant: CraftCart Company AB, 614 34 Söderköping (SE)
(72) Inventor: LORD, Torbjörn, 614 34 SÖDERKÖPING (SE)
(74) Representative: Bergenstråhle & Partners AB

(57) **Abstract**

An amphibious vehicle (1) having a front and a rear part, between which one or two seats (5) are arranged. A lower part of a body of the vehicle (1) is shaped like a planning hull (3). A front chassis unit (14) is arranged in the front part and a rear chassis unit (15) in the rear part. Two height-adjustable rear wheels (7), each having a respective wheel housing (8), are arranged on a respective wheel axle. The rear wheels (7), together with their wheel housings (8), can be raised and lowered through rotation around an eccentrically placed horizontal rear axle (31) which is arranged across the longitudinal direction of the vehicle (1). A raisable and lowerable drive wheel (6) is set up in the front section. The front wheel (6) is steerable by means of a handlebar (9). An outboard motor (4), placed between the rear wheels, is arranged to be immersed in water at a sea setting of the vehicle (1).

## Description

### TECHNICAL FIELD

The present invention relates to a vehicle which is classified as a moped when traveling on land and which is furthermore convertible to a vehicle which is driven in water. The vehicle is thus an amphibious vehicle.

### STATE OF THE ART

Amphibious vehicles with wheels that fold in when traveling in water and are lowered when traveling on land are known in the art. These known vehicles are usually specifically advantageous when either traveling on land or when traveling in water or when traveling both on land and in water. If these vehicles are to meet all the requirements for free movement on all types of roads when traveling on land, the cost of an amphibious vehicle will be high, and the vehicles will not be so attractive on the private market.

Mopeds are a type of vehicle that is classified by authorities in different countries, where these vehicles have restrictions with regard to the permitted maximum speed, number of wheels, motor power as well as where the vehicle may be driven. As an example, an EU moped with three or four wheels may be driven at a speed of not more than 45 km / h and be equipped with either a piston motor of not more than 50 cm³, or with an electric motor that has a rated power of not more than 6 kW. The weight of a four-wheeled EU moped (commonly called a moped car) may not exceed 425 kg.

Mopeds as amphibious vehicles are not known in the art. The patent publication US5690046 shows a three- or four-wheeled amphibious vehicle that is useful as a motorcycle when traveling on land, whereby such a vehicle is faced with the very strict rules that apply to vehicles on all types of roads at type inspection, as well as that the driver of the vehicle must be a registered driving license holder.

The patent publication US2020307734 shows an amphibious vehicle which is also has off-road capabilities and which is thereby not confined to be driven on only flat road surfaces when traveling on land. Such a vehicle becomes rather expensive due to the requirement for a chassis structure that is adapted to stresses that arise during off-road driving and thereby to a small extent interesting to a wide audience.

### DESCRIPTION OF THE INVENTION

The device according to an aspect of the invention consists of an amphibious vehicle having a front part and a rear part, between which one or two seats for users of the vehicle are arranged. The vehicle has a body whose lower part is shaped like a planing boat hull. Inside the body, the vehicle has a front chassis unit in the front and a rear chassis unit in the rear. In the rear part, two height-adjustable rear wheels are arranged on a respective wheel axle. Each of the rear wheels has a wheel housing. The rear wheel together with its wheel housing can be raised and lowered by a rotation around an eccentrically placed horizontal rear axle which is arranged across the longitudinal direction of the vehicle. A raisable and lowerable front drive wheel is set up in the front part. The front wheel is steerable by turning it by means of a handlebar located in front of a seat intended for a driver of the vehicle.

When using the amphibious vehicle as a vehicle for travel on land, driving force from an electric motor arranged at the front wheel is used. The energy source is at least one rechargeable battery. When traveling in water, an outboard motor is used which is intended to be hung on a console between the two rear wheels. The outboard motor can be permanently mounted on the console or be removable if desired when traveling on land. When converting the vehicle for travel in water, the console carrying the outboard motor is displaced downwards by means of a fourth linear actuator so that the propeller of the outboard motor is set at the intended depth in the water. Correspondingly, the outboard motor is moved to an uppermost position when the vehicle is converted to operation on land. Control of the vehicle when traveling in water also takes place by means of the handlebar, which then controls the direction of the propeller in a conventional manner for determining the direction of travel of the vehicle.

The amphibious vehicle is set up for driving on land in that both the rear wheels and the driving front wheel are set in the locked lowered position. A significant advantage of utilizing drive on the front wheel is that this is the wheel of the vehicle that first connects to land during a transition from sea operation to land operation. In this way is obtained, when driving towards land, a driving wheel in contact with a solid surface at the first land sensing, as the rear wheels can still be surrounded by water.

An essential detail of the amphibious vehicle is a safety device with which it is equipped. When converting the vehicle from land to sea operation, a moisture sensor that senses that it is covered with water is set up. If this moisture sensor does not detect that it is below a water surface, the moisture sensor affects the vehicle's electrical system in such a way that it is not possible to convert to sea operation. The reason for this safety feature is to exclude the risk of the wheels being raised from the land setting when driving on land and the risk of the outboard motor being lowered without the vehicle being surrounded by water. As an additional alternative to increase safety, the vehicle can be equipped with a second sensor, where it detects that all wheels are stationary. If a signal is received from this sensor that the wheels are not stationary, this second sensor prevents conversion to the setting for sea operation. In order to further prevent an unjustified conversion to the sea setting when driving on land, in another aspect of the invention, the electrical system of the vehicle is arranged so that the driver must set the neutral position of the motor and keep a foot brake of the vehicle depressed. This is done with a view to the risk that very heavy rain could cause the humidity sensor to inadvertently detect being positioned in water even though the vehicle is on land.

As mentioned, the front wheel is what drives the vehicle, where this is arranged so that the front wheel is driven by a drive motor in the form of an electric wheel motor which is connected to said one or more rechargeable batteries, preferably of the lithium-ion type. The motor is preferably located in the driving front wheel inside the rim of this wheel. With a 72 V lithium-ion battery, for example, the amphibious vehicle can reach a mileage of 40-60 km depending on the road type. The top speed is 45 km / h if the vehicle is type-inspected as an EU moped.

The front wheel is foldable between an upper position, a sea setting, and a lower position, a land setting. This is arranged in that a first linear actuator, which is anchored in an oval front frame around a mechanism for raising and lowering the front wheel, has a rod which pushes the front wheel to the lower position or pulls the front wheel back to the upper position. When the front wheel is in the upper position, the front wheel is intended to be protected by means of a bow gate which is arranged under the hull of the vehicle. According to a preferred embodiment, the bow gate is arranged slidably linearly in the longitudinal direction of the vehicle. This displacement is provided by a linear hydraulic cylinder or a third linear actuator which controls the bow gate to be passed over an opening in the hull through which the front wheel is lowered at the land setting, where the hydraulic cylinder, or actuator, is controlled by signals from the electrical system. The purpose of the bow gate is, of course, to prevent water from entering the space occupied by the front wheel and its mechanisms when traveling in the sea, and further to improve the seaworthiness of the vessel by tightly closing to the bottom of the hull when in contact with water.

In the rear of the vehicle, a rear axle tube is arranged across the longitudinal axis of the vehicle. The rear axle is mounted in this rear axle tube. At each end of the rear axle, one end of a pivot arm is aligned perpendicular to the rear axle. On this pivot arm, at its other end, the rear wheel is suspended. By rotating the pivot arm from a first direction thereof when the rear wheels are completely lowered against a ground, the rear wheels can be hoisted up to a higher position, here called the sea setting for the rear wheel. The pivot arm is then rotated in a second direction. The rotation of the pivot arm is achieved by means of a rear second linear actuator attached to a chassis structure, where this rear second linear actuator rod is connected to the rear axle by means of a mechanical transmission so that the rod can rotate the rear axle via the mechanical transmission so that its pivot arms are rotated. In the mechanical transmission, a spring with shock absorbers is located, whereby the rear wheels receive both suspension and damping in relation to the ground during driving with the rear wheels lowered.

The outboard motor is set up on a motor lift, where this motor lift comprises a fourth linear actuator, a lifting tool, the housing of which is fixed to the chassis structure in the rear part. Along the fourth linear actuator, two substantially parallel links are hinged at a specific distance from each other, an upper link to the outer part of the rod which the lifting tool, the fourth linear actuator, projects or pulls into its role as a linear actuator and the lower link is attached to the housing of the lifting tool, the fourth linear actuator. At the upper end of each link, these are hinged to a console on which the outboard motor is suspended. The two links, the console and the part of the rod to which the links are connected essentially form a parallelogram. When the rod is extended from the fourth linear actuator, the parallelogram will change shape by rotating the links backwards and downwards, which leads to the outboard motor being lowered to a predetermined height in relation to the vehicle hull at the position where the outboard motor is located. The angle of the propeller in relation to the water surface is also set automatically. It should also be mentioned here that the outboard motor can be lifted off the console when the vehicle is fully used for driving on land.

The device has features according to the features specified in claim 1. Features of a method are specified in the independent method claim. Further embodiments of the invention are presented in the dependent claims.

### DESCRIPTION OF FIGURES

Figure 1 shows schematically in a perspective view the amphibious vehicle according to the aspect of the invention.
Figure 2 shows the amphibious vehicle according to figure 1 in a perspective view from behind.
Figure 3 shows a perspective view from the side of the amphibious vehicle according to figure 1 when this is set in the land setting.
Figure 4 shows a perspective view from the side of the amphibious vehicle according to figure 1 when it is set in the sea setting.
Figure 5 shows a side view of the front and rear chassis units of the amphibious vehicle according to Figure 1 when the vehicle is in the land setting.
Figure 6 shows a sketch from the side of the front and rear chassis units with the amphibious vehicle according to figure 1 in the sea setting.
Figure 7 shows the mechanism of the front wheel and the positions of the components of the mechanism when the front wheel is lowered.
Figure 8 shows the mechanism of the front wheel and the positions of the components of the mechanism when the front wheel is raised.
Figure 9 shows the front frame within which the front wheel and its components are suspended.
Figure 10 shows the mechanism of the rear wheels and the positions of the components of the rear wheel mechanism when the rear wheels are lowered against a ground.
Figure 11 shows the rear wheel mechanism and the positions of the components of the rear wheel mechanism when the rear wheels are raised.
Figure 12 illustrates the rear wheels in a device for maneuvering the rear wheels between the sea setting and the land setting for these by means of a view seen from the front of the vehicle. The land setting for the rear wheels is shown here.
Figures 13 a, b, and c show with 3 images in a series depicting the outboard motor's suspension in the rear of the vehicle and how the outboard motor is raised or lowered.
Figure 14a illustrates a block diagram showing how the different functions of the vehicle are arranged to be controlled when converting the vehicle from the land setting to the sea setting, while figure 14b shows the corresponding block diagram when converting from the sea setting to the land setting.
Figure 15 shows a block diagram of a safety solution where driving of the front wheels of the vehicle is permitted only if certain conditions are met.

### DESCRIPTION OF EMBODIMENTS

In the following, a number of embodiments of the invention are described with reference to the accompanying drawings. The drawings show only schematically the principle of the device and do not claim to show to any scale any proportions between different elements thereof.

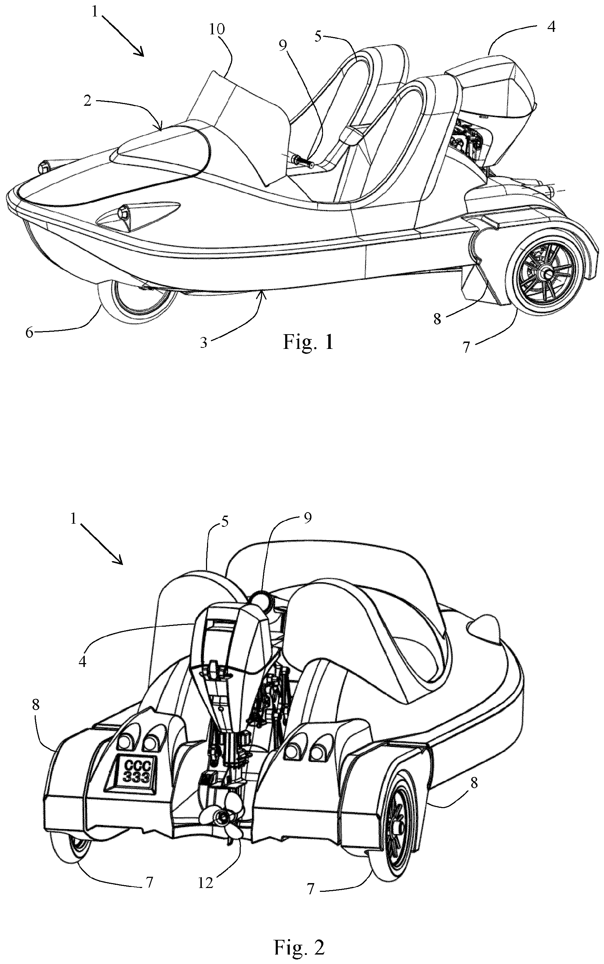

The amphibious vehicle is indicated in Figure 1 by reference number 1. In the figure, the body is indicated by reference 2, while the part of the body called the hull below is indicated by 3. In the rear of the vehicle is a hoisted outboard motor 4. In the embodiment shown, the amphibious vehicle has two seats 5 for users of the vehicle. The front wheel in the front part is indicated by the number 6 while the rear wheels are denoted by 7. The rear wheels 7 are on their upper sides surrounded by a respective wheel housing 8. Rear wheels 7 and associated wheel housings 8 are interconnected and can be raised and lowered as one unit. In front of the seats 5, a steering device for the vehicle in the form of a handlebar 9 is indicated. A windscreen 10 can, if desired, be mounted in front of the seats 5. Figure 2 shows the amphibious vehicle 1 in a perspective view obliquely from behind and slightly from above.

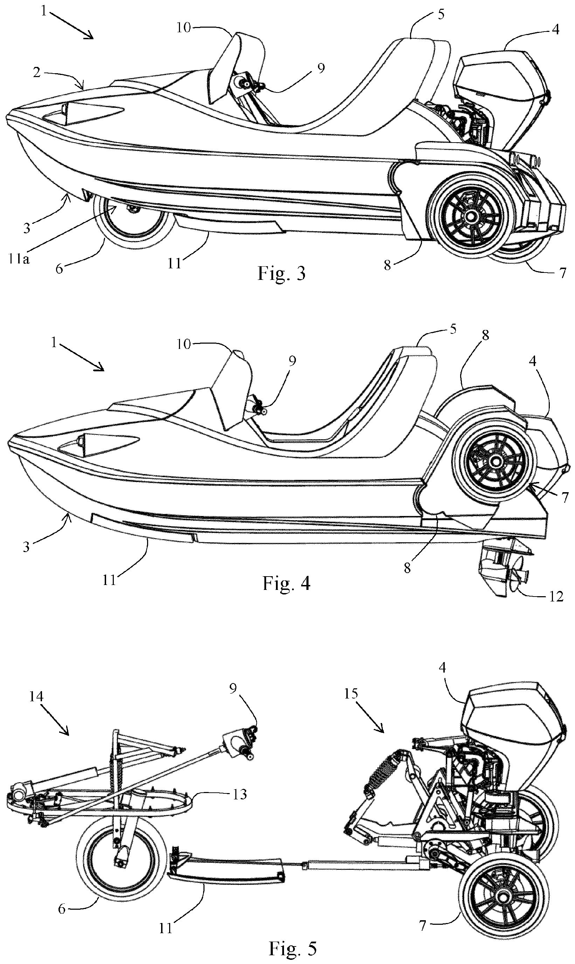

Figure 3 shows a side view of the amphibious vehicle 1 as a land vehicle where the rear wheels 7 together with their wheel housings 8 and the front wheel 6 are completely lowered, while the outboard motor 4 is raised to its uppermost position. Figure 4 shows is a side view the amphibious vehicle 1 in the sea setting for travel as a sea-going motor-driven vehicle, where the rear wheels 7 and associated wheelhouses 8 are raised to the uppermost level, while the outboard motor 4 here is lowered to its lowermost level and its associated propeller 12 is located below the amphibious vehicle hull 3. In this sea setting of the vehicle a bow gate 11 has been pushed forward by means of a third linear actuator, which constitutes a bow gate conveyor 11b, to cover an opening 11a in the hull 3, through which opening the front wheel is lowered when traveling on land.

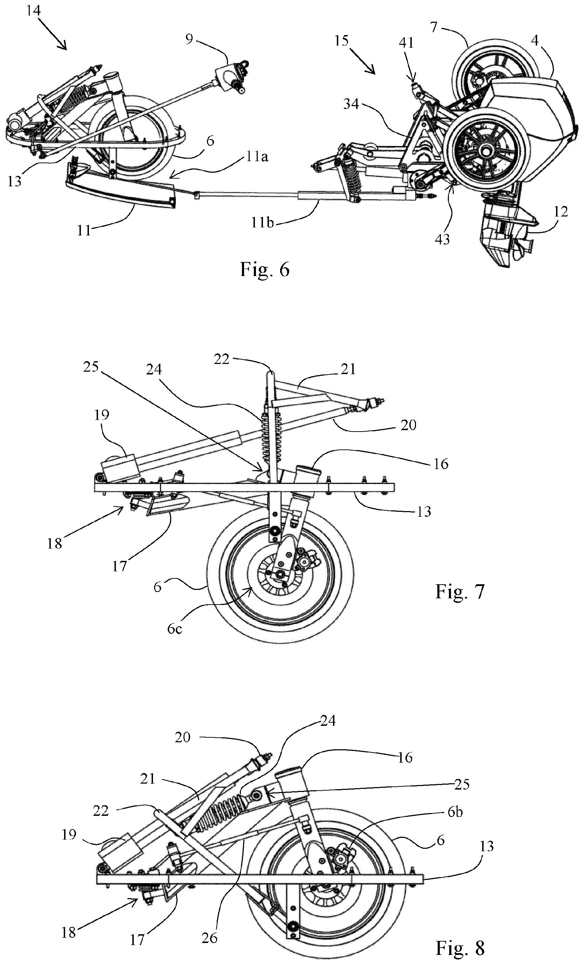

An exemplary embodiment of the chassis of the amphibious vehicle 1 in its entirety, when the vehicle is in the land setting, is shown in Figure 5. Here, in a front chassis unit 14, the mechanics of the front wheel 6 are shown, where a supporting part of the front chassis unit consists of a front frame 13. A rear chassis unit 15 shows components which are arranged for adjusting the rear wheels 7 for the land or the sea setting and the components which move the outboard motor 4 between the land and the sea settings. The rear wheels 7, the front wheel 6 and the outboard motor 4 are all lowered for operation of the vehicle in the land setting. Figure 6 shows that the bow gate 11 is retracted to a rear position. The corresponding location of the components of the amphibious vehicle 1 when it is in the sea setting is illustrated with the entire chassis shown in figure 7. The outboard motor 4 is lowered and the front wheels 6 and rear wheels 7 are raised. The bow gate 11 is projected to a front position, i.e. to the position where the bow gate closes to the opening in the hull through which the front wheel 6 can be lowered upon transition to the land setting.

The front chassis unit 14 is illustrated in Figure 7 and shows the mechanism of the front wheel 6 in more detail. As mentioned, the components of the mechanism of the front wheel 6 are secured in a front frame 13. It can be seen that the front wheel 6 is mounted in a front fork 16 which is hinged via a link 17 around a pivot point 18 adjacent the front part of the front frame 13. The first linear actuator 19 is, with its first end, hinged to the upper side of the front part of the front frame 13. At its other end, the slidable rod 20 of the first linear actuator is hinged to a connecting link 21 which is fixedly connected to the curved part of a tilt frame 22, shaped like an arch, the legs 23 of which, at their respective bottoms, are connected by means of joints to a respective side of the front frame 13 at respective sides of the front wheel. Inside the tilt frame 22, a shock absorber 24 with spring is fixed with one end to the curved part of the tilt frame 22. The other end of the shock absorber 24 is connected to a point 25 where the front fork 16 and link 17 are connected. By means of this device, when projecting the rod 20, the first linear actuator 19 can rotate the entire tilt frame 22 together with the shock absorber 24 so that the front fork 16 and its link 17 lower the front wheel 6 to the lowest predetermined position. When the rod 20 is retracted into the housing of the first linear actuator 19, the front wheel 6 is raised to its uppermost position, whereby the front wheel is arranged in the sea setting.

Figure 8 shows the corresponding opposite rotation of the front wheel 6 from the lowermost position to the uppermost position at the retraction of the rod 20 of the first linear actuator 19 (not visible in Figure 8). Figures 7 and 8 also show a steering link 26 which is arranged for coupling to the handlebar 9 for rotation of the front wheel axle in a horizontal plane. A brake 6b is arranged next to the front wheel 6. The drive motor 6c is not visible but is referred to by 6c.

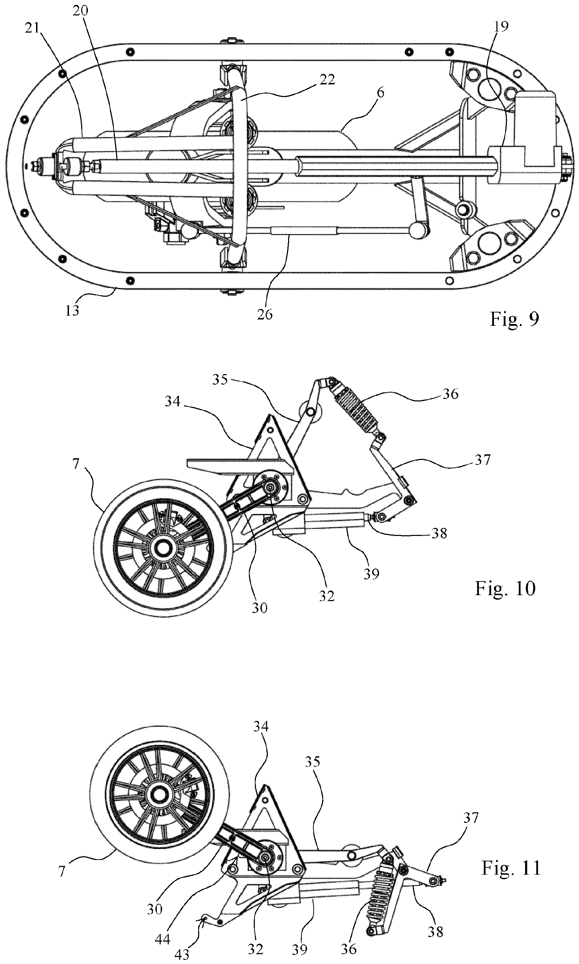

The front frame 13 is shown in figure 9 seen from above. Here it is clearly illustrated how the first linear actuator 19 with its rod 20 influences the connecting link 21 to exert force on the tilt frame 22 to move the front wheel 6 between its uppermost and lowermost position.

Figures 10, 11 and 12 show, in the rear chassis unit 15, the device for the rear wheels 7 to switch between the sea setting and the land setting. Each rear wheel 7 is mounted with its rear axle in an outer end 7a of a pivot arm 30. The inner end of each pivot arm 30 is fixed perpendicular to the rear axle 31 to a fixed point at its outer ends 32 where this fixed point forms a center of rotation of the pivot arm 30. The rear axle 31 is divided into two sections, one for the right rear wheel and one for the left rear wheel. These two sections of the rear axle 31 are housed in the rear axle tube 33, where the rear axle tube is attached to a chassis structure 34 across the longitudinal direction of the vehicle. The inner ends of both sections of the rear axle 31 are attached to one end of a pivot arm 35 which is connected at its other end over a rear shock absorber 36 to a link arm 37 which is hinged to the outer tip of a rear rod 38 of a rear second linear actuator 39. The rear second linear actuator 39 is mounted to the underside of the chassis structure 34. When pulling the rear rod 38 into the housing of the second linear actuator 39, the upper part of the link arm 37 pivots upwardly whereby the rear wheels 7 are rotated downwardly about the pivot center 32 of the pivot arm 30 whereby the rear wheels, when the rear rod 38 is retracted, has lowered the rear wheels to their lowest position corresponding to the land setting of the vehicle. Correspondingly, when the rear rod 38 is pushed out, the pivot arm 30 is rotated upwards, which gives a raised position for the rear wheels 7. Since the wheel housings 8 are mounted with the rear wheels, the wheel housings will follow the movement of the rear wheels when they are rotated down or up. Furthermore, it is shown in this construction that suspension and shock absorption are arranged in the mechanism itself by means of the rear shock absorber 36 being arranged in the link system described here for raising and lowering the rear wheels.

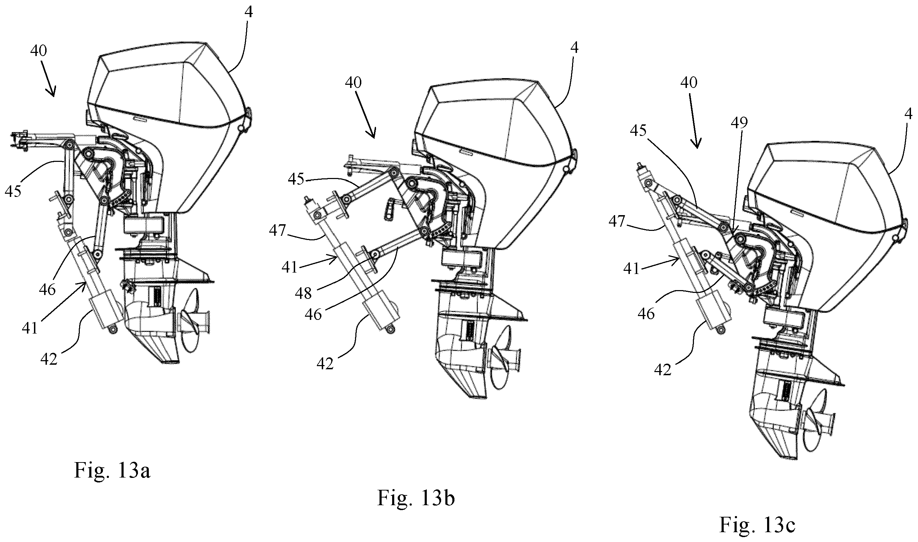

The outboard motor 4 is arranged on a motor lift 40 shown in Figures 13 a, b and c. In these figures, the outboard motor is shown in three different positions. To the left, in Figure 13a, the outboard motor is fully raised, which corresponds to the land setting, and to the far right, in Figure 13c, the outboard motor is completely lowered, corresponding to the sea setting. The middle figure 13b shows the outboard motor in an intermediate position, during raising or lowering. The motor lift 40 comprises a fourth linear actuator, here called the lifting tool 41, the housing 42 of which is fixed to the chassis structure 34 in the rear of the vehicle at points 43 and 44 according to the exemplary embodiment (shown in Figures 6 and 11). Along the lifting tool 41, the fourth linear actuator, two substantially parallel links, an upper 45 and a lower 46 link, are hinged at a specific distance from each other, the upper link 45 at the outer end of the rod 47 which the lifting tool 41 projects or retracts its role as the fourth linear actuator and the lower link 46 at a point 48 on the housing 42 of the fourth linear actuator. At the outer end of the respective link, 45, 46, these are hinged to a console 49, on which the outboard motor 4 is suspended. The two links 45, 46, the console 49 and the part of the rod 47 to which the links are connected substantially form a parallelogram. Upon transition to the sea setting by projecting the rod 47 from the lifting tool 41, the fourth linear actuator, the parallelogram will change shape by rotating the links 45, 46 backwards and downwards and thereby lowering the console 49, thereby causing the outboard motor 4 to be lowered to a predetermined level relative to the hull 3 of the vehicle at the position where the outboard motor 4 is located. The angle of the propeller 12 in relation to the water surface is also set automatically.

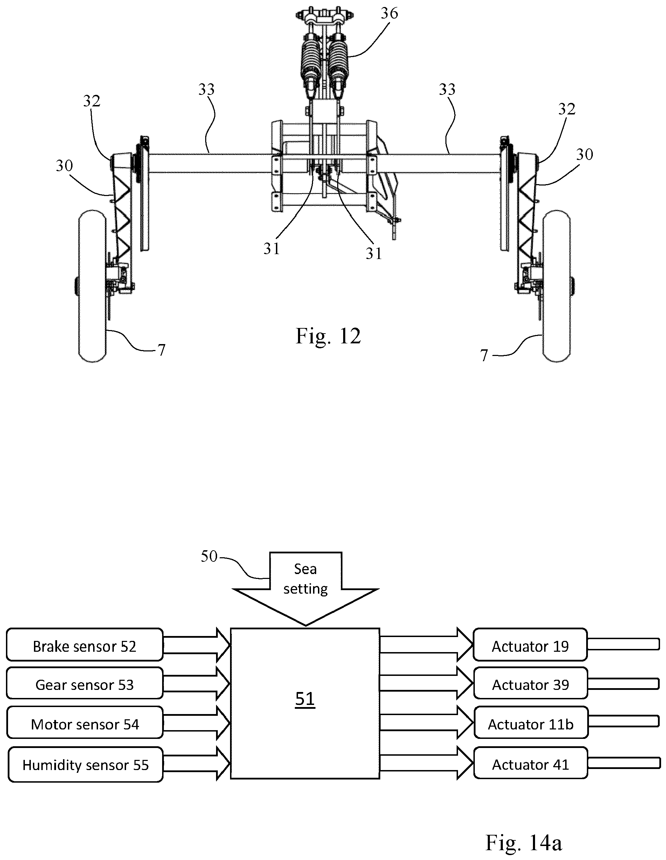

In the following is schematically described, with the aid of Figure 14a by means of a block diagram, an electrical system for controlling the conversion between the sea setting and the land setting and vice versa. An actuator 50, with which these adjustments can be controlled by the driver of the vehicle, is connected to a control circuit 51. Connected to this control circuit are at least signals from:
a) a first sensor 52 indicating whether or not the vehicle brake 6b is on,
b) a third sensor 53 which indicates whether the vehicle's gear is in neutral or in forward / reverse driving mode,
c) a second sensor 54 indicating whether the vehicle's drive motor 6c is in operation or stopped,
d) a fourth sensor, the humidity sensor 55 which indicates whether the vehicle is surrounded by water or not.

When the actuator 50 is put in position for conversion of the vehicle to the sea setting and if all these conditions apply:
- that the first sensor 52 detects that the brake 6b is applied,
- that the third sensor 53 detects that the vehicle's forward / reverse drive gear is in neutral,
- that the second sensor 54 detects that the vehicle's drive motor 6c is not active,
- that the fourth sensor, the humidity sensor 55, detects that the vehicle is , surrounded by water,
the control circuit 51 stages the conversion of the vehicle to the sea setting by activating a series of linear actuators, symbolized in Fig. 14a by connecting the actuators to the control circuit 51, where these actuator activations mean that: the first linear actuator 19 raises the front wheel to its uppermost position, the rear second linear actuator 39 raises the rear wheels and wheel housings to their uppermost positions, the bow gate conveyor 11b, the third linear actuator, closes the opening 11a under the raised front wheel, and the lifting tool 41, the fourth linear actuator, lowers the outboard motor 4 to its lowermost position, i.e. of the position for driving the vehicle in water.

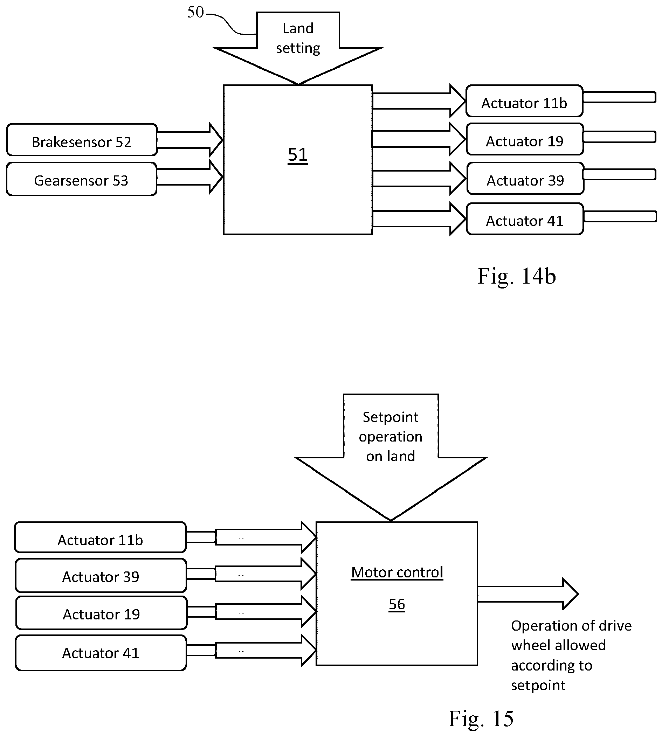

Correspondingly, with the aid of Figure 14b, the electrical system for controlling the conversion from the sea setting to the land setting is described schematically by means of a block diagram. The actuator 50 is then switched to the land setting. If all these conditions apply:
- that the first sensor 52 detects that the brake 6b is applied,
- that the third sensor 53 detects that the vehicle's gear for forward / reverse drive is set to neutral,
the control circuit 51 stages the conversion of the vehicle to the land setting by activating the series of linear actuators, symbolized in Fig. 14b by connecting the actuators to the control circuit 51, where these activations mean that: the bow gate conveyor 11b, the third linear actuator, opens the opening 11a under the raised front wheel, the first linear actuator 19 lowers the front wheel to its lowermost position, the rear second linear actuator 39 lowers the rear wheels and wheelhouses to their lowermost positions, and the lifting tool 41, the fourth linear actuator, raises the outboard motor 4 to its uppermost position.

Of course, the number of inputs to the control circuit 51 can be reduced. For example, the requirement for detections from one or both of the third and second sensors 53 and 54 can be exempted. The consequence of this is that the safety level when converting land / sea setting is reduced somewhat and can, if deemed sufficient, be a fully usable alternative.

A further exemplary embodiment is schematically illustrated in Figure 15. This embodiment comprises a safety solution to prevent inappropriate control of the active components of the vehicle. It is vital that four of the vehicle's linear motors (actuators) are set in the correct positions for the front wheel 6 to be started. These vital linear motors are:
the linear motor for the "bow gate", called the third linear actuator or the bow gate conveyor 11b,
the linear motor for the rear wheel suspension, here called the second linear actuator 39,
the linear motor for the front wheel, here called the first linear actuator 19, and
the linear motor for motor lifting, here called the fourth linear actuator or the lifting tool 41.

According to the safety solution, these four linear motors (actuators) must all be in the correct position for it to be possible to start the front wheel. The control circuit 51 in this embodiment comprises a motor control 56 which detects that:
- the bow gate conveyor 11b, the third linear actuator, has opened the bow gate 11,
- the second linear actuator 39 has lowered the rear wheels 7 to the position for land operation, i.e. to the land setting,
- the first linear actuator 19 has lowered the front wheel 6 to the position for land operation, i.e. to the land setting, and
- the lifting tool 41, the fourth linear actuator, has raised the outboard motor 4 to its uppermost position, i.e. to the land setting,
after which the motor control 56 opens for driving the front wheel of the vehicle, in this case the front wheel 6.

The setpoint for the motor control 56 is set according to the conditions listed above. Setpoints other than those specified here can of course be set.

## Claims

1. Amphibious vehicle (1) comprising:
- a body (2) the lower part of which consists of a hull (3),
- a front chassis unit (14) inside the body (2) in a front part of the vehicle (1), where a raisable and lowerable front wheel (6) is arranged in the front chassis unit (14), which front wheel (6) is lowered and driving in a land setting of the vehicle (1), and
- a rear chassis unit (15) inside the body (2), in a rear part of the vehicle (1), and, at each side of the rear part, a raisable and lowerable rear wheel (7) which is lowered in the land setting,
**characterized in that** the amphibious vehicle (1) between the rear wheels (7) has an outboard motor (4) which is raised to an uppermost position in the land setting and lowered to a lowermost position in a sea setting of the vehicle (1), and **in that** each of the rear wheels (7), together with a rear wheel housing (8) associated with that rear wheel (7), in the event of a conversion between the land and sea settings is lowered and raised respectively and the conversion is performed through a rotation of the rear wheel (7) and associated wheel housing (8) around a rear axle (31) eccentrically placed in relation to an axle of the rear wheel (7) in a vertical plane along the vehicles (1) longitudinal direction, whereby, when the wheel housings (8) are raised in the sea setting, their outer contours are arranged to be aligned with the contours of the hull (3).

2. The amphibious vehicle (1) according to claim 1, where a humidity sensor (55) is arranged to detect if the humidity sensor (55) is surrounded by water and where the humidity sensor (55) via a control circuit (51) allows conversion of the vehicle (1) from the land setting to the sea setting only if the humidity sensor (55) detects that it is surrounded by water.

3. The amphibious vehicle (1) according to claim 1 or 2, where a motion sensor (54) detects a stationary status, indicating that the wheels (6, 7) of the vehicle do not rotate, whereby the motion sensor (54) via the control circuit (51) allows conversion of the vehicle from the land setting to the sea setting only if the stationary status is detected.

4. The amphibious vehicle (1) according to claim 1, where the front wheel (6) is arranged in the front chassis unit (14) in a front frame (13) to which a first linear actuator (19) is mounted, whereby the front wheel (6) is arranged to be lowerable or raisable from the uppermost position, the sea setting, to the lowermost position, the land setting, or conversely by adjusting a sliding rod (20) of the first linear actuator (19) by means of a mechanical coupling from the rod (20) to a rotatable front fork (16) in which the front wheel (6) is suspended.

5. The amphibious vehicle according to claim 4, where a shock absorber (24) is included in the mechanical coupling between the rod (20) and the front fork (16).

6. The amphibious vehicle (1) according to claim 5, where an opening (11a) is arranged in the hull (3) through which opening the front wheel (6) is lowered during conversion of the vehicle to the sea setting, where furthermore a sliding bow gate (11) is arranged, whereby the bow gate (11) is retracted when the vehicle (1) is in the land setting and inserted over the opening (11a) when the vehicle (1) is in the sea setting.

7. The amphibious vehicle (1) according to claim 1, comprising:
- an actuator (50) for conversion of the vehicle from the land setting to the sea setting and from the sea setting to the land setting, respectively,
- a brake (6b) and a first sensor (52) which detects whether the brake (6b) is on or not,
- a drive motor (6c) for the front wheel (6) and a second sensor (54) which detects whether the drive motor (6c) is active,
- a gear for selecting driving of the vehicle forwards / backwards and a third sensor (53) which detects whether the gear is in neutral,
- a fourth sensor, humidity sensor (55), which detects that the vehicle is surrounded by water, and
- a control circuit (51) which receives detected signals from the first sensor (52), the second sensor (54), the third sensor (53) and the fourth sensor (55).

8. The amphibious vehicle (1) according to claims 6 and 7, comprising:
- the first linear actuator (19) which is arranged to raise or lower the front wheel (6),
- a second linear actuator (39) which is arranged to raise or lower the rear wheel (7) and associated wheel housing (8),
- a third linear actuator (11b), a bow gate conveyor, which is arranged to close or open the bow gate (11) over the opening (11a) for the front wheel (6),
- a fourth linear actuator (41), a lifting tool, which is arranged to lower the outboard motor (4) to its lowermost position or raise the outboard motor (4) to its uppermost position, and
- where the control circuit (51) controls activation of the first to fourth linear actuators depending on detected signals from the first (52) to fourth sensor (55).

9. Method for conversion of the amphibious vehicle (1) according to claim 8 from the land setting to the sea setting, comprising the steps of:
- setting the actuator (50) to sea setting,
- setting the gear for the drive motor (6c) to neutral,
- retaining the brake (6b) on,
- activating the control circuit (51) to, by the first to fourth linear actuator raise the rear wheel (7) and associated wheel housing (8) to the uppermost position, to raise the front wheel (6) to the uppermost position, to close the bow gate (11) over the opening (11a), and to lower the outboard motor (4) to the lowermost position for propulsion of the vehicle (1) in water.

10. Method for conversion of the amphibious vehicle (1) according to claim 8 from the land setting to the sea setting, comprising the steps of:
- setting the actuator (50) to land setting,
- setting the gear for the drive motor (6c) to neutral,
- retaining the brake (6b) on, and
- activating the control circuit (51) to, by the first to fourth linear actuator lower the rear wheel (7) and associated wheel housing (8) to the lowermost position, to lower the front wheel (6) to the lowermost position, to open the bow gate (11) over the opening (11a), and to raise the outboard motor (4) to the uppermost position.

11. Method for, in the amphibious vehicle (1) according to claim 8, preventing that driving of the front wheel 6 can be initiated unless first to fourth linear actuators (19, 39, 11b, 41) of the vehicle (1) are set to a safe setting, comprising the steps of:
- detecting by a motor control (56) that:
- the third linear actuator (11b), bow gate conveyor, has opened the bow gate (11),
- the second linear actuator (39) has lowered the rear wheels (7) to a setting for land travel, i.e. to the land setting,
- the fist linear actuator (19) has lowered the front wheel (6) to a setting for land travel, i.e. to the land setting, and
- the fourth linear actuator (41), lifting tool, has raised the outboard motor (4) to its uppermost position, i.e. the land setting,
whereupon the motor control (56) opens for driving the front wheel (6) of the vehicle.

12. Amphibious vehicle (1) comprising:
- a body (2) the lower part of which consists of a hull (3),
- a front chassis unit (14) inside the body (2) in a front part of the vehicle (1), where a raisable and lowerable front wheel (6) is arranged in the front chassis unit (14), which front wheel (6) is lowered and driving in a land setting of the vehicle (1),
- and a rear chassis unit (15) inside the body (2), in a rear part of the vehicle (1), and, at each side of the rear part, a raisable and lowerable rear wheel (7) which is lowered in the land setting,
**characterized in that** the amphibious vehicle (1) has a motor lift (40) between the rear wheels (7) which includes a fourth linear actuator (41), lifting tool, the housing (42) of which is fixed to the rear chassis unit (15), and the fourth linear actuator (41) are two essentially parallel links (45, 46) hinged a specific distance from each other, an upper link (45) to the outer part of the rod (47) which the lifting tool, the fourth linear actuator (41), extends or retracts in its role as a linear actuator, and a lower link (46) attached to the housing (42) of the lifting tool, fourth linear actuator (41), at an upper end of the respective links (45, 46) which are hinged to a console (49) for detachable suspension of an outboard motor (4) which is raised to an uppermost position at the land setting and lowered to a lowermost position at a sea setting of the vehicle (1), and that each respective one of the rear wheels (7), together with a wheel housing (8) associated with the rear wheel (7), during a conversion between the land setting and the sea setting is lowered and raised respectively, and where the conversion is performed through a rotation of the rear wheels (7) and wheel housings (8) about a rear axle (31) which is arranged eccentrically in relation to the axle of the rear wheel in a vertical plane along the longitudinal direction of the vehicle (1), whereby when the wheel housings (8) are raised into the sea setting the outer contours of these are arranged to be aligned with contours of the hull (3).
